# EUROPEAN PATENT SPECIFICATION

(11) **EP 0 529 309 B1**
(45) Date of publication and mention of the grant of the patent: **27.12.1995**
(21) Application number: 92112595.1
(22) Date of filing: 23.07.1992
(51) Int. Cl.: G01P 9/04

(54) **Method of manufacturing a vibrator**
Verfahren zur Herstellung eines Schwingkörpers
Procédé de fabrication d'un vibrateur

(30) Priority: 26.07.1991 JP 209850/91; 26.07.1991 JP 209851/91
(43) Date of publication of application: 03.03.1993
(73) Proprietor: MURATA MANUFACTURING CO., LTD., Nagaokakyo-shi Kyoto-fu 226 (JP)
(72) Inventor: Nakamura, Takeshi, Nagaokakyo-shi, Kyoto-fu (JP); Heinouchi, Yoshiaki, Nagaokakyo-shi, Kyoto-fu (JP)
(74) Representative: Schoppe, Fritz, Dipl.-Ing.

(56) References cited:
- GB-A- 2 190 492
- US-A- 4 836 023

## Description

### Field of the Invention

The present invention relates to a method of manufacturing a vibrator, and particularly, to a method of manufacturing a vibrator used, for example, as a vibrating body of a vibrating gyroscope.

### Description of the Prior Art

As a conventional vibrator, a metal material having a constant elasticity such as elinver and formed into a triangular prism shape was used. Such vibrator was formed by using, for example, a columnal constant elastic material and by deforming such as roll forming and dice forming. The vibrator is used, for example, in an angular velocity sensor, in this case piezoelectric elements are fixed to side faces of the vibrator.

In such angular velocity sensor, by applying a driving signal to one piezoelectric element or two piezoelectric elements, the vibrator bends and vibrates. When rotating about an axial direction of the vibrator in this state, a vibrating direction is changed by a Coriolis force. Voltages are generated in the piezoelectric elements responsive thereto, thereby a rotational angular velocity applied to the angular velocity sensor can be detected by measuring the voltages.

For example, in the case of manufacturing a triangular prism-shaped vibrator, a columnal constant elastic material 1 as shown in Fig. 8 is prepared. The constant elastic material 1 is rolled by rollers 2, as shown in Fig. 9, and formed into a nearly triangular prism-shaped section. At this time, as indicated by arrows in Fig. 9, portions which are to be planes of the constant elastic material are pressed inwardly, and portions which are to be ridge lines of the triangular prism are pushed outwardly and deformed. The vibrator 3 thus manufactured is exposed to stresses as shown by arrows in Fig. 10.

However, it is difficult to bring such stress distribution completely symmetrical against the center of the vibrator. And hence, the bend occurs on the vibrator due to atmospheric temperature. When the vibrator is used in the angular velocity sensor and the bend occurs on the vibrator, the voltage responsive to the bend of the vibrator is generated in the piezoelectric element. It is difficult to measure an accurate rotational angular velocity.

It is a primary object of the present invention to provide a method of manufacturing a vibrator which hardly bends due to changes of the atmospheric temperature.

This object is achieved by a method in accordance with claim 1 and by a method in accordance with claim 4.

In accordance with the present invention, a vibrator is provided which has a body of uniform stress distribution. Consequently, temperature changes will hardly bend the body of the vibrator. Hence, when the vibrator is applied to angular velocity sensor, errors due to the bending of the vibrator are reduced so as to enable a more accurate detection of the rotational angular velocity.

When forming a seamless cylindrical pipe into a body of polygonal prismatic shape, stresses are concentrated in an expanding direction of the cylindrical material or a direction of the ridge lines of the polygonal prismatic body. Thus, on plane portions of the polygonal prismatic body, stresses are minimized.

The above and other objects, features, aspects and advantages of the present invention will become more apparent from the following detailed description of the embodiment made with reference to the drawings.

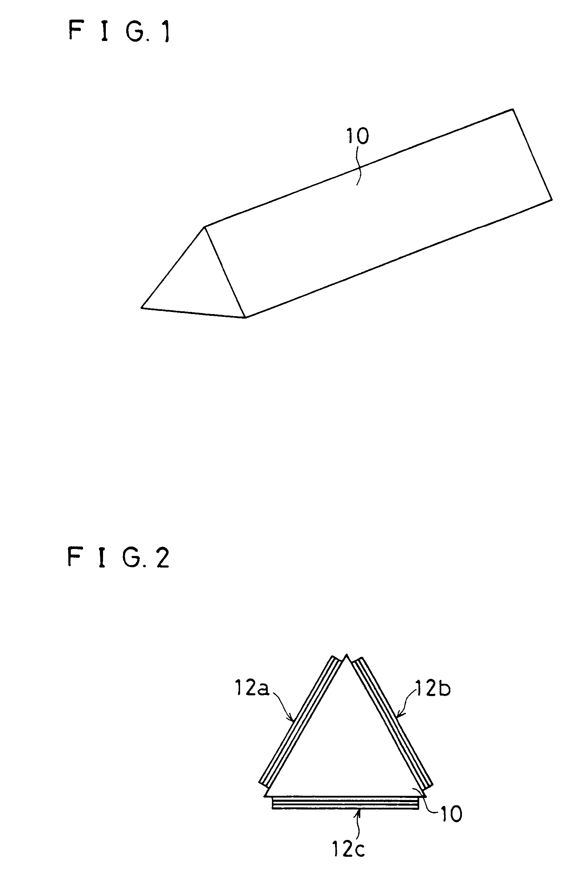

Fig. 1 is a perspective view showing one embodiment of the present invention.

Fig. 2 is an illustrative view showing an angular velocity sensor having a vibrator shown in Fig. 1.

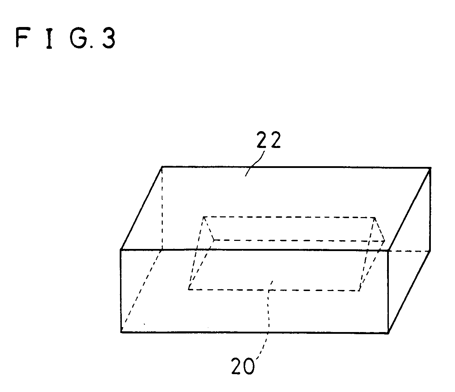

Fig. 3 is an illustrative view of a metal mold used for manufacturing the vibrator shown in Fig. 1.

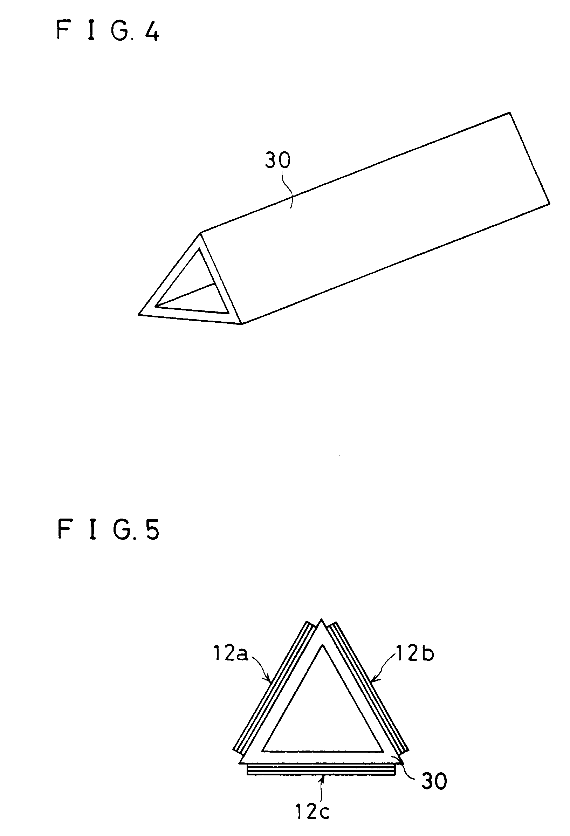

Fig. 4 is a perspective view showing another embodiment of the present invention.

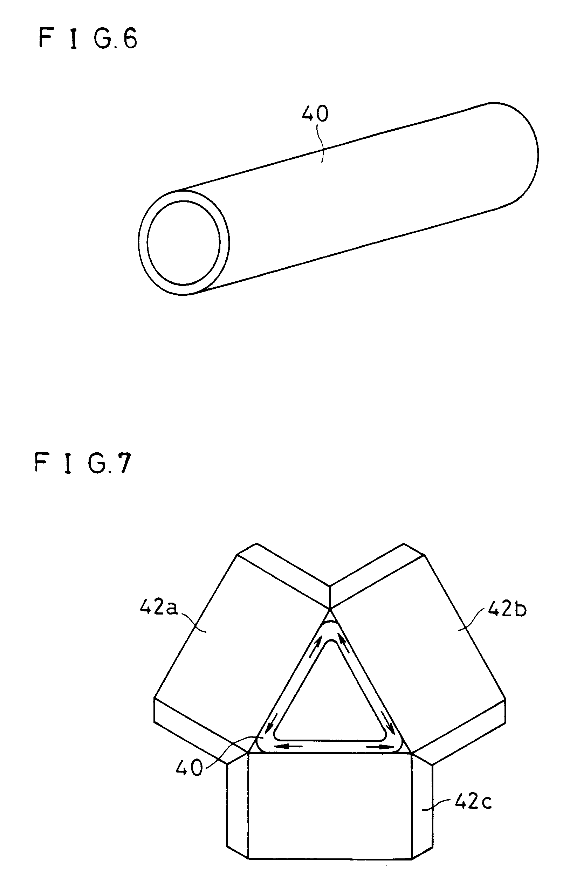

Fig. 5 is an illustrative view showing an angular velocity sensor using a vibrator shown in Fig. 4.

Fig. 6 is a perspective view of a seamless pipe used for manufacturing the vibrator shown in Fig. 4.

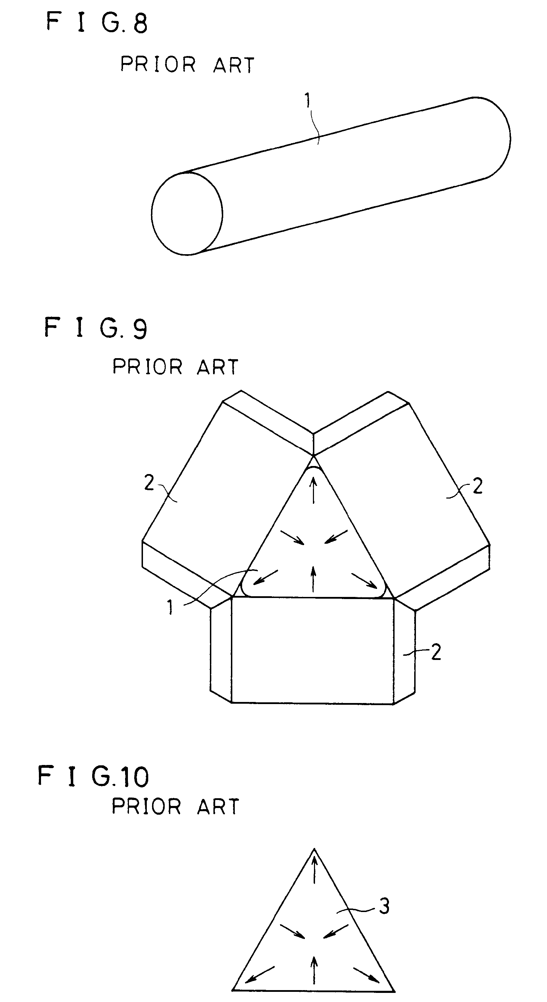

Fig. 7 is an illustrative view showing a state wherein the seamless pipe shown in Fig. 6 is rolled.

Fig. 8 is a perspective view showing a material used for manufacturing a conventional vibrator which is a background of the present invention.

Fig. 9 is an illustrative view showing a state wherein the material shown in Fig. 8 is rolled.

Fig. 10 is an illustrative view showing a section of a conventional vibrator manufactured by the rolling shown in Fig. 9.

Fig. 1 is a perspective view showing one embodiment of the present invention. A vibrator 10 is formed with a metal material such as elinver, stainless steel and nickel alloy (42% nickel) or a ceramic material. The vibrator 10 is formed, for example, into a regular triangular prism shape. The vibrator 10 is used, for example, as a vibrating body of an angular velocity sensor. In this case, as shown in Fig. 2, on the center portions on outer side faces of the vibrator 10, piezoelectric elements 12a, 12b and 12c are formed respectively. A driving signal is applied to the piezoelectric elements 12a and 12b or the piezoelectric element 12c. By the driving signal, the vibrator 10 bends and vibrates in a direction orthogonal to a surface whereon the piezoelectric element 12c is formed. When rotating about an axial direction of the vibrator 10 in this state, a Coriolis force is exerted and a vibrating direction of the vibrator 10 is changed. At this time, voltages responsive to an applied rotational angular velocity are generated in the two piezoelectric elements 12a and 12b. Thus, by measuring a difference in voltages generated in the piezoelectric elements 12a and 12b, the rotational angular velocity applied to an angular velocity sensor can be detected.

When manufacturing the vibrator 10, for example, powders of metal material having a constant elasticity are prepared. Moreover, as shown in Fig. 3, for example, a metal mold 22 having a regular triangular prism-shaped cavity 20 is prepared. In the cavity 20 of the metal mold 22, powders of the constant elastic metal material are filled. The powders are pressed and molded, and further fired to form the vibrator 10.

In the vibrator 10, since the constant elastic metal material powders are molded and fired, as the case of deforming of a columnal material, stress is not exerted on the vibrator 10. Therefore, even when atmospheric temperature has changed, the bent is hardly occurred on the vibrator 10. Thus, when the vibrator 10 is applied to the angular velocity sensor, the voltages are not generated in the piezoelectric elements 12a and 12b due to the bent by changes in atmospheric temperature, and only the voltage responsive to the rotational angular velocity can be measured. And hence, the rotational angular velocity can be detected accurately.

In the case of using the vibrator 10 in the angular velocity sensor, due to a mechanical quality coefficient Q of the vibrator 10, the time required for stabilization of characteristics from the disturbance varies. The larger the Q is, the better the performance as the vibrator is, but the response time is prolonged. Meanwhile, the smaller the Q is, the worse the performance as the vibrator is, but the response time is shortened. Thus, by selecting the Q suitably, the performance as the vibrator and the response time can be balanced.

For adjusting the Q, a quantity of powders of the constant elastic metal material filled in the metal mold 22 may be changed, thereby density of the vibrator 10 changes and the Q of the vibrator 10 is adjusted. In this method, only the Q can be changed without changing the material of the vibrator 10. For example, when the material of the vibrator is changed, a Young's modulus changes, thereby changing a propagation velocity. However, the quantity of powders of the constant elastic metal material is changed, only the Q can be changed without changing the characteristics such as Young's modulus. Thus, the response time can be adjusted by using the material having preferred characteristics.

Though the vibrator is formed into a triangular prism shape in the above-mentioned embodiment, a shape of the vibrator may be formed into the other shapes as required, such as a quadrangular prism shape and a hexagonal prism shape. As the material of the vibrator, responsive to the required characteristics, powders of a metal material having no constant elasticity, a ceramic material and a glass material may be used besides the constant elastic metal material.

Fig. 4 is a perspective view showing an another embodiment of the present invention. A vibrator 30 is formed by, for example, a metal material such as elinver, stainless steel, nickel alloy (42% nickel) and the like or a ceramic material. The vibrator 30 is formed, for example, into a regular triangular cylindrical shape. The vibrator 30 is used, for example, as a vibrating body of an angular velocity sensor. In this case, as shown in Fig. 5, on the center portions of outer side faces of the vibrator 30, piezoelectric elements 12a, 12b and 12c are formed respectively. In a same manner as the angular velocity sensor shown in Fig. 2, a rotational angular velocity applied to the angular velocity sensor can be detected.

When manufacturing the vibrator 30, as shown in Fig. 6, for example, a seamless pipe 40 consisting of a metal material having a constant elasticity is prepared. The seamless pipe 40 is subjected to deforming by, for example, roll forming. In this case, as shown in Fig. 7, the seamless pipe 40 is fed through the portion surrounded by three rollers 42a, 42b and 42c. By the rollers 42a, 42b and 42c, stresses are exerted on the seamless pipe 40 in a direction of ridge lines of the triangular cylinder as indicated by arrows in Fig. 7. The seamless pipe 40 is formed into the triangular cylindrical shape by repeating such operation. Then, the vibrator 30 shown in Fig. 4 is formed by cutting the seamless pipe 40 into a suitable length.

In the vibrator 30, since the cylindrical seamless pipe 40 is subjected to deforming, there is no stress which is exerted inwardly on the vibrator 30 as in the case of forming the columnar material. Thus, a distribution of the stress exerted on the vibrator 30 is well-balanced, and the bend on the vibrator 30 is hardly occurred even when atmospheric temperature has changed. Thus, when the vibrator 30 is applied to the angular velocity sensor, voltages are not generated in the piezoelectric elements 12a and 12b due to the bend by the change in atmospheric temperature, and only the voltage responsive to the rotational angular velocity can be measured. And hence, the rotational angular velocity can be detected accurately.

When the vibrator 30 is used in the angular velocity sensor, the sensitivity is changed by a weight of the vibrator 30. And hence, for adjusting the sensitivity of the angular velocity sensor, metals, resins, ceramics and the like may be filled in the cavity of the vibrator 30 to adjust its weight.

In the above-mentioned embodiment, though the seamless pipe was subjected to deforming by roll forming, the vibrator may be manufactured by dice forming or press forming. It is also possible to combine these methods to manufacture the vibrator. Moreover, as the material of the vibrator, a metal material having no constant elasticity, a ceramic material and a glass material may be used besides the constant elastic metal material responsive to required characteristics. As a shape of the vibrator, it may be formed into the other shapes as required, such as a quadrangular cylindrical shape and a hexagonal cylindrical shape besides the regular triangular cylindrical shape. That is, by forming the metal material or the ceramic material into a polygonal cylindrical shape by deforming, the vibrator in which the bend due to the change in atmospheric temperature is little can be obtained.

While the present invention has been particularly described and shown, it is to be understood that such description is used merely as an illustration and an example rather than limitation, and the scope of the present invention is determined solely by the terms of the appended claims.

## Claims

1. Method of manufacturing a vibrator for detecting angular velocity, comprising the steps of:
- molding a powder material into a prismatic columnar shape;
- firing said molded powder material such that a body of uniform stress distribution which hardly bends in response to temperature changes is obtained; and
- forming piezoelectric elements on the center portions of the outer side faces of the body.

2. Method in accordance with claim 1, wherein said powder material is a metal powder material.

3. Method in accordance with claim 1, wherein said powder material is a ceramic powder material.

4. Method of manufacturing a vibrator for detecting angular velocity, comprising the steps of:
- providing a seamless cylindrical pipe;
- forming said seamless cylinderical pipe into a body of polygonal prismatic shape such that the stress distribution on the plane portions of the body is uniform; and
- forming piezoelectric elements on the center portions of the outer side faces of the body.

5. Method in accordance with claim 4, wherein said step of forming is effected by roll forming.

6. Method in accordance with claim 4, wherein said step of forming is effected by dice forming.

7. Method in accordance with claim 4, wherein said step of forming is effected by press forming.

8. Method in accordance with any of claims 4 to 7, wherein said seamless pipe is formed with a metal material.

9. Method in accordance with any of claims 4 to 7, wherein said seamless pipe is formed with a ceramic material.

## Patentansprüche

1. Verfahren zum Herstellen eines Vibrators zur Erfassung einer Winkelgeschwindigkeit mit folgenden Schritten:
- Formen eines Pulvermaterials in eine prismatische Säulenform;
- Brennen des geformten Pulvermaterials, derart, daß ein Körper mit gleichmäßiger Spannungsverteilung erhalten wird, der sich als Reaktion auf Temperaturänderungen kaum verbiegt; und
- Bilden von piezoelektrischen Elementen auf den Mittelabschnitten der äußeren Seitenflächen des Körpers.

2. Verfahren gemäß Anspruch 1, bei dem das Pulvermaterial ein metallisches Pulvermaterial ist.

3. Verfahren gemäß Anspruch 1, bei dem das Pulvermaterial ein keramisches Pulvermaterial ist.

4. Verfahren zum Herstellen eines Vibrators zur Erfassung einer Winkelgeschwindigkeit mit folgenden Schritten:
- Bereitstellen eines nahtlosen zylindrischen Rohrs;
- Formen des nahtlosen, zylindrischen Rohrs in einen Körper mit polygonaler -Prismenform, derart, daß die Spannungsverteilung in den ebenen Abschnitten des Körpers gleichmäßig ist; und
- Bilden piezoelektrischer Elemente auf den Mittelabschnitten der äußeren Seitenflächen des Körpers.

5. Verfahren gemäß Anspruch 4, bei dem der Schritt des Formens durch Walzenformung bewirkt wird.

6. Verfahren gemäß Anspruch 4, bei dem der Schritt des Formens durch Zerteilungsformung bewirkt wird.

7. Verfahren gemäß Anspruch 4, bei dem der Schritt des Formens durch Druckformung bewirkt wird.

8. Verfahren gemäß einem beliebigen der Ansprüche 4 bis 7, bei dem das nahtlose Rohr aus einem Metallmaterial gebildet ist.

9. Verfahren gemäß einem beliebigen der Ansprüche 4 bis 7, bei dem das nahtlose Rohr aus einem Keramikmaterial gebildet ist.

## Revendications

1. Procédé de fabrication d'un vibrateur destiné à capter la vitesse angulaire, comprenant les étapes consistant à:
- mouler un matériau en poudre en forme de colonne prismatique,
- cuire ledit matériau en poudre moulé de telle manière qu'il est obtenu un corps à répartition uniforme des pressions qui fléchit à peine en réponse à des variations de température, et
- former des éléments piézoélectriques sur les parties centrales des faces latérales extérieures du corps.

2. Procédé suivant la revendication 1, dans lequel ledit matériau en poudre est un matériau en poudre métallique.

3. Procédé suivant la revendication 1, dans lequel ledit matériau en poudre est un matériau en poudre céramique.

4. Procédé de fabrication d'un vibrateur destiné à capter la vitesse angulaire, comprenant les étapes consistant à:
- prévoir un tube cylindrique sans cordon de soudure,
- façonner ledit tube cylindrique sans cordon de soudure en un corps de forme prismatique polygonal, de telle manière que la répartition des pressions sur les parties planes du corps est uniforme, et
- former des éléments piézoélectriques sur les parties centrales des faces latérales extérieures du corps.

5. Procédé suivant la revendication 4, dans lequel ladite étape de façonnage est réalisée par profilage.

6. Procédé suivant la revendication 4, dans lequel ladite étape de façonnage est réalisée par estampage.

7. Procédé suivant la revendication 4, dans lequel ladite étape de façonnage est réalisée par façonnage à la presse.

8. Procédé suivant l'une ou l'autre des revendications 4 à 7, dans lequel ledit tube sans cordon de soudure est formé en un matériau métallique.

9. Procédé suivant l'une ou l'autre des revendications 4 à 7, dans lequel ledit tube sans cordon de soudure est formé en un matériau céramique.
